# EUROPÄISCHE PATENTSCHRIFT

(11) **EP 2 759 438 B1**
(45) Veröffentlichungstag und Bekanntmachung des Hinweises auf die Patenterteilung: **29.07.2020**
(21) Anmeldenummer: 13004144.5
(22) Anmeldetag: 22.08.2013
(51) Int. Cl.: B60K 23/08, B60K 17/356, B60K 7/00, B60W 50/00, B60W 30/18

(54) **Fahrzeugantrieb mit einem hydrostatischen Hilfsantrieb, Fahrzeug mit einem derartigen Fahrzeugantrieb und Betriebsverfahren dafür**
Drive unit for a motor vehicle with a hydrostatic auxiliary drive, vehicle with such a drive unit and method of operating the same
Mécanisme d'entraînement de véhicule doté d'un entraînement auxiliaire hydrostatique, véhicule avec un tel mécanisme d'entraînement et procédé d'opération pour un tel mécanisme d'entraînement

(30) Priorität: 25.01.2013 DE 102013001254
(43) Veröffentlichungstag der Anmeldung: 30.07.2014
(73) Patentinhaber: MAN Truck & Bus SE, 80995 München (DE)
(72) Erfinder: Beierer, Philipp, 85716 Unterschleißheim (DE); Resch, Franz, 82299 Türkenfeld (DE); Linke, Ingo, 82194 Gröbenzell (DE)
(74) Vertreter: v. Bezold & Partner Patentanwälte - PartG mbB

(56) Entgegenhaltungen:
- EP-A1- 2 508 382
- WO-A1-94/12363
- WO-A1-2012/163375
- CH-A5- 697 030
- DE-A1- 3 246 182
- DE-A1- 3 305 437
- DE-A1- 4 133 060
- DE-A1- 4 340 735
- GB-A- 2 151 565
- US-A- 4 444 286
- US-A1- 2006 030 974
- US-A1- 2008 128 191

## Beschreibung

Die Erfindung betrifft einen Fahrzeugantrieb für ein Fahrzeug, insbesondere für ein Nutzfahrzeug, mit einem hydrostatischen Hilfsantrieb. Weiterhin betrifft die Erfindung ein entsprechendes Betriebsverfahren für einen solchen Fahrzeugantrieb.

Bei Nutzfahrzeugen (z.B. Lastkraftwagen) erfolgt der Hauptantrieb hauptsächlich durch Verbrennungsmotoren (z.B. Dieselmotoren), wobei es ebenfalls aus dem Stand der Technik bekannt ist, bei Bedarf vorübergehend einen hydrostatischen Hilfsantrieb zuzuschalten, der die Hauptantriebsachse durch Hydraulikmotoren unterstützt. Die Aktivierung dieses hydrostatischen Hilfsantriebs erfolgt üblicherweise manuell durch den Fahrer, der hierzu einen Schalter betätigt. Zum Schutz des hydraulischen Systems des hydrostatischen Hilfsantriebs und auch zum Schutz der Umwelt verfügen die bekannten Nutzfahrzeuge mit einem solchen hydrostatischen Hilfsantrieb über eine einfache Sensorik (z.B. Messung von Drehzahl, Temperatur, Druck), welche im Zusammenspiel mit einer Steuereinheit den Hilfsantrieb temporär oder dauerhaft deaktivieren kann.

Nachteilig an der herkömmlichen manuellen Aktivierung des hydrostatischen Hilfsantriebs ist die Gefahr, dass der Fahrzeugführer die Fahrsituation falsch einschätzt und den hydrostatischen Hilfsantrieb beispielsweise zu spät aktiviert, wodurch eventuell nutzbarer Schwung des Nutzfahrzeugs verloren geht. Im schlimmsten Fall bleibt das Nutzfahrzeug dann trotz der Aktivierung des hydrostatischen Hilfsantriebs hängen. Im Gegensatz dazu führt eine dauerhafte Aktivierung des hydrostatischen Hilfsantriebs zu einer unnötigen, überproportionalen Einschaltdauer des hydrostatischen Hilfsantriebs, welche sich wiederum in verkürzter Lebensdauer der Hydraulikkomponenten des hydrostatischen Hilfsantriebs niederschlägt.

Bei der derzeitig bekannten Ausführung handelt es sich um ein sogenanntes passives System, d.h. die Systemcharakteristik des Hilfsantriebs erlaubt keine automatische bzw. kontinuierliche Anpassung der Hilfsantriebsparameter an den Fahr- und Umgebungszustand. Dies führt zum einen zu einer Reduzierung der Energieeffizienz des Fahrzeuges bzw. zu einer Limitierung des Einsatzbereiches.

Im Hinblick auf den Stand der Technik, der bezüglich eines Fahrzeugantriebs mit hydraulischem Hilfsantrieb relevant ist, wird ferner auf die WO 94/12363 A1, das die Merkmale des Oberbegriff des Anspruchs 1 zeigt, die EP 2 508 382 A1, die WO 2012/163375 A1, die US 2008/128191 A1, die US 2006/030974 A1, die DE 43 40 735 A1, die DE 41 33 060 A1, die DE 33 05 437 A1, die CH 697 030 A5, die US 4 444 286 A, die GB 2 151 565 A und die DE 32 46 182 A1 hingewiesen.

Der Erfindung liegt deshalb die Aufgabe zugrunde, einen verbesserten Fahrzeugantrieb mit einem solchen hydrostatischen Hilfsantrieb zu schaffen.

Diese Aufgabe wird durch einen erfindungsgemäßen Fahrzeugantrieb gemäß dem Hauptanspruch gelöst.

Die Erfindung umfasst die allgemeine technische Lehre, den hydrostatischen Hilfsantrieb automatisch zu steuern (d.h. Einstellung ohne Rückkopplung) oder zu regeln (d.h. Einstellung mit Rückkopplung).

Zum einen bietet dies den Vorteil, dass der hydrostatische Hilfsantrieb unabhängig von der Geschicklichkeit des Fahrzeugführers gesteuert bzw. geregelt wird und somit kontinuierlich, gerade in kritischen Fahrsituationen, die Handhabbarkeit und das Fahrverhalten des Fahrzeugs gewährleistet.

Zum anderen bietet die automatische Steuerung bzw. Regelung des hydrostatischen Hilfsantriebs aber auch den Vorteil, dass eine unnötig lange Aktivierung des hydrostatischen Hilfsantriebs vermieden werden kann, da der hydrostatische Hilfsantrieb erst dann aktiviert wird, wenn er tatsächlich benötigt wird. Die automatische Steuerung bzw. Regelung des hydrostatischen Hilfsantriebs führt also zu einer Verringerung der Einschaltdauer des hydrostatischen Hilfsantriebs, was wiederum zu einer verlängerten Lebensdauer der Hydraulikkomponenten des hydrostatischen Hilfsantriebs führt und die Gesamteffizienz des Fahrzeuges steigert. In diesem Zusammenhang ist zu erwähnen, dass der Hilfsantrieb einen zusätzlichen Verbraucher darstellt, so dass durch eine Verkürzung der Aktivierungszeiten des Hilfsantriebs die durch den Hilfsantrieb entstehenden Verluste verringert und die Gesamteffizienz erhöht wird.

Die erfindungsgemäß vorgesehene Steuerung bzw. Regelung des Hilfsantriebs wirkt sich ebenfalls positiv auf Handhabbarkeit, Fahrverhalten und Gesamteffizienz des Fahrzeugs aus.

Der im Rahmen der Erfindung verwendete Begriff einer Steuerung des Hilfsantriebs umfasst auch die automatische Aktivierung des Hilfsantriebs, was aus dem Stand der Technik nicht bekannt ist.

In einem bevorzugten Ausführungsbeispiel der Erfindung erfolgt die automatische Steuerung/Regelung des hydrostatischen Hilfsantriebs durch eine Steuereinheit in Abhängigkeit von mindestens einer Betriebsgröße des Fahrzeugs. Der im Rahmen der Erfindung verwendete Begriff einer Betriebsgröße des Fahrzeugs umfasst sowohl Betriebsgrößen, mit denen das jeweilige Fahrzeug betrieben wird (z.B. Fahrzeuggeschwindigkeit, Fahrzeugbeschleunigung in Fahrzeuglängsrichtung und/oder in Fahrzeugquerrichtung, Öltemperatur, Öldruck, Ölvolumenstrom) als auch Betriebsgrößen, unter denen das Fahrzeug betrieben wird (z.B. Umgebungstemperatur, Luftfeuchtigkeit). Andere Beispiele für Betriebsgrößen des Fahrzeugs, die im Rahmen der Erfindung berücksichtigt werden können, sind die Fahrzeugposition, Topographiekarten, der Fahrzeugneigungswinkel, insbesondere die Längsneigung und/oder die Querneigung des Fahrzeugs bzw. die Achslastverteilung, die Differenzdrehzahl zwischen den Fahrzeugrädern der selben Fahrzeugachse, die Differenzdrehzahl zwischen verschiedenen Fahrzeugachsen sowie die prozessorunterstützte Auswertung eines Bildes, das von einer Fahrzeugkamera aufgenommen wird, um beispielsweise den Straßenzustand zu ermitteln.

In dem bevorzugten Ausführungsbeispiel der Erfindung erfolgen sowohl Aktivierung als auch Deaktivierung des hydrostatischen Hilfsantriebs automatisch durch die Steuereinheit, die dabei mindestens eine Betriebsgröße des Fahrzeugs berücksichtigt.

In einer Variante der Erfindung wirkt der Hauptantrieb (z.B. mit einem Verbrennungsmotor) auf eine Hauptantriebsachse des Fahrzeugs, während der hydrostatische Hilfsantrieb auf eine andere Hilfsantriebsachse des Fahrzeugs wirkt. Drehzahlsensoren messen in dieser Variante die Drehzahlen an der Hauptantriebsachse und an der Hilfsantriebsachse und leiten die gemessenen Drehzahlwerte an die Steuereinheit weitere, die daraus die Drehzahldifferenz zwischen Hauptantriebsachse und Hilfsantriebsachse berechnet. Die Steuereinheit aktiviert dann den hydrostatischen Hilfsantrieb in Abhängigkeit von der ermittelten Drehzahldifferenz zwischen der Hauptantriebsachse und der Hilfsantriebsachse. Vorzugsweise erfolgt die Aktivierung des hydrostatischen Hilfsantriebs hierbei, wenn die Drehzahldifferenz zwischen der Hauptantriebsachse und der Hilfsantriebsachse einen bestimmten maximal zulässigen Wert überschreitet, was auf ein Durchdrehen oder zumindest einen großen Schlupf der Räder der Hauptantriebsachse schließen lässt.

In einer anderen Variante der Erfindung messen dagegen Drehzahlsensoren die Drehzahl an der Hauptantriebsachse und die Steuereinheit berechnet aus der gemessenen Drehzahl der Hauptantriebsachse einen Vergleichs-Wert der Fahrzeugslängsbeschleunigung, der sich ohne wesentlichen Schlupf an der Hauptantriebsachse einstellen würde. Darüber hinaus ist in dieser Variante der Erfindung ein Beschleunigungssensor vorgesehen, der als Betriebsgröße des Fahrzeugs einen Ist-Wert der Fahrzeugslängsbeschleunigung misst. Die Steuereinheit vergleicht dann den Ist-Wert der Fahrzeuglängsbeschleunigung mit dem berechneten Vergleichs-Wert der Fahrzeuglängsbeschleunigung und aktiviert den hydrostatischen Hilfsantrieb, wenn eine Abweichung von Ist-Wert und Vergleichs-Wert der Fahrzeuglängsbeschleunigung auftritt. So deutet eine Abweichung zwischen Vergleichs-Wert und Ist-Wert der Fahrzeugslängsbeschleunigung darauf hin, dass die Hauptantriebsachse durchdreht oder zumindest einen übermäßigen Schlupf aufweist, was die Zuschaltung des hydrostatischen Hilfsantriebs sinnvoll macht.

In einer weiteren Variante der Erfindung ermittelt die Steuereinheit einen Schätzwert für den Reibwert der Straße im Nahfeld des Fahrzeugs, wobei die Steuereinheit beispielsweise die Umgebungstemperatur, die Position des Fahrzeugs, die Luftfeuchtigkeit, die Uhrzeit und/oder ein Kamerabild der Straße berücksichtigen kann. In Abhängigkeit von dem so ermittelten Schätzwert für den Reibwert der Straße aktiviert die Steuereinheit dann den hydrostatischen Hilfsantrieb. Beispielsweise kann die Steuereinheit durch Berücksichtigung der vorstehend genannten Betriebsgrößen ermitteln, ob Straßenglätte droht und dann den hydrostatischen Hilfsantrieb zuschalten. In der Regel erfolgt die Aktivierung des hydrostatischen Hilfsantriebs in dieser Variante der Erfindung also dann, wenn der geschätzte Reibwert der Straße einen bestimmten Grenzwert unterschreitet.

In einer anderen Variante der Erfindung wird mittels eines Querbeschleunigungssensors als Betriebsgröße des Fahrzeugs die Querbeschleunigung des Fahrzeugs gemessen. Die Steuereinheit kann den hydrostatischen Hilfsantrieb dann aktivieren, wenn die gemessene Querbeschleunigung des Fahrzeugs einen bestimmten Grenzwert überschreitet.

Darüber hinaus besteht in dieser Variante der Erfindung die Möglichkeit, dass mittels eines Lenkwinkelsensors der Lenkwinkel der gelenkten Fahrzeugachse gemessen wird, wobei die Steuereinheit die gemessene Querbeschleunigung des Fahrzeugs mit dem Lenkwinkel vergleicht und den hydrostatischen Hilfsantrieb in Abhängigkeit von dem Vergleich aktiviert. Die Steuereinheit kann hierbei in Abhängigkeit von dem gemessenen Lenkwinkel und der gemessenen Fahrzeuggeschwindigkeit einen Vergleichs-Wert für die Querbeschleunigung berechnen, der dann mit einem gemessenen Ist-Wert für die Querbeschleunigung verglichen wird, wobei die Steuereinheit den hydrostatischen Hilfsantrieb vorzugsweise dann aktiviert, wenn eine übermäßige Abweichung zwischen dem Vergleichs-Wert und dem Ist-Wert der Querbeschleunigung auftritt.

Eine weitere Variante der Erfindung sieht dagegen vor, dass mittels eines Neigungssensors der Neigungswinkel des Fahrzeugs gemessen wird, beispielsweise in Fahrzeuglängsrichtung und/oder in Fahrzeugquerrichtung. Ergänzend dazu bzw. als Alternative dazu werden die einzelnen Radlasten erfasst. Die Steuereinheit aktiviert den hydrostatischen Hilfsantrieb dann, wenn der gemessene Neigungswinkel des Fahrzeugs bzw. eine oder mehrere Radlasten einen bestimmten Grenzwert überschreitet. Hierbei geht es im allgemeinen um die Feststellung, wie viel Last auf einem einzelnen Rad ruht und damit, wie viel Drehmoment über dieses Rad übertragen werden kann.

Weiterhin sieht eine Variante der Erfindung eine Lenkunterstützung oder eine Verbesserung der Kurvendynamik im Rahmen eines sogenannten "Torque Vectoring" vor. Hierbei wird eine gewünschte Antriebskraftverteilung zwischen linker und rechter Fahrzeugseite berechnet, insbesondere in Abhängigkeit von dem Lenkwinkel des Fahrzeugs, der Fahrzeuggeschwindigkeit und geschätzten Reibwertunterschieden der Straße zwischen linker und rechter Fahrzeugseite. Die Reibwerte der Straße können in der vorstehend beschriebenen Weise geschätzt werden, wobei auch ein Kamerabild der Straße berücksichtigt werden kann. Die Steuereinheit steuert dann die Hydraulikmotoren des hydrostatischen Hilfsantriebs an der linken Fahrzeugseite und an der rechten Fahrzeugseite mit der berechneten Antriebskraftverteilung an, um die Kurvendynamik zu verbessern und/oder die Lenkung zu unterstützen.

In einer weiteren Variante vergleicht die Steuereinheit zusammen mit dem Lenkwinkeleinschlag und der Fahrzeugquerbeschleunigung die Raddifferenzdrehzahl zwischen der linken und rechten Seite einer Achse und steuert selektiv die einzelnen Radmotoren an, um maximalen Antrieb bzw. Kraftübertragung zu gewährleisten. Somit hat diese Variante die Eigenschaft einer adaptiven Quersperre.

Die vorstehend beschriebenen Varianten der Erfindung können jeweils einzeln realisiert werden oder in beliebiger Weise miteinander kombiniert werden.

In dem bevorzugten Ausführungsbeispiel der Erfindung treibt der hydrostatische Hilfsantrieb zwei Hilfsantriebsachsen an, wobei die erste Hilfsantriebsachse beispielsweise eine gelenkte Vorderachse des Fahrzeugs sein kann, während die zweite Hilfsantriebsachse eine liftbare Fahrzeugachse sein kann, so dass die zweite Hilfsantriebsachse von der Fahrbahn abgehoben werden kann, wenn kein entsprechender Antriebsbedarf besteht. Weiterhin ist zu erwähnen, dass die zweite Hilfsantriebsachse wahlweise als Nachlaufachse oder als Vorlaufachse realisiert werden kann, die in Fahrtrichtung hinter bzw. vor der Hauptantriebsachse angeordnet ist. Schließlich ist noch zu erwähnen, dass diese zweite Hilfsantriebsachse lenkbar oder nicht-lenkbar ausgeführt sein kann.

Es besteht im Rahmen der Erfindung jedoch auch die Möglichkeit, dass die Hauptantriebsachse eine erste Hinterachse ist, während die Hilfsantriebsachse eine zweite Hinterachse ist, die als Vorlaufachse oder als Nachlaufachse realisiert werden kann. Weiterhin ist zu erwähnen, dass diese Hinterhilfsantriebsachse liftbar ausgeführt sein kann. Schließlich ist noch festzuhalten, dass diese Hilfsantriebsachse wahlweise lenkbar oder nicht-lenkbar ist.

In dem bevorzugten Ausführungsbeispiel der Erfindung weist der hydrostatische Hilfsantrieb eine Hochdruckpumpe auf, wobei die Steuereinheit den Volumenstrom des hydrostatischen Hilfsantriebs variabel einstellen kann. Eine Möglichkeit zur variablen Einstellung des Volumenstroms besteht darin, dass die Hochdruckpumpe als Verstellpumpe realisiert ist, die als solche einen variablen Volumenstrom fördern kann. Eine andere Möglichkeit zur Realisierung eines variablen Volumenstroms besteht in der Verwendung einer Hochdruckpumpe mit konstantem Verdrängervolumen zusammen mit zusätzlichen hydraulischen Stellgliedern. Beide Varianten entsprechen dem Stand der Technik.

Weiterhin ist zu erwähnen, dass der hydrostatische Hilfsantrieb vorzugsweise mehrere Hydraulikmotoren aufweist, die jeweils ein Rad des Fahrzeugs antreiben, wobei die Steuereinheit die einzelnen Hydraulikmotoren vorzugsweise unabhängig voneinander ansteuert.

Ferner ist zu erwähnen, dass die Erfindung nicht nur Schutz beansprucht für den vorstehend beschriebenen erfindungsgemäßen Fahrzeugantrieb. Vielmehr beansprucht die Erfindung auch Schutz für ein komplettes Fahrzeug (z.B. Nutzfahrzeug, wie beispielsweise Lastkraftwagen oder Omnibus), das mit einem solchen Fahrzeugantrieb ausgestattet ist.

Bei dem Fahrzeug handelt es sich also in der Regel nicht um einen Personenkraftwagen (PKW) oder eine Landmaschine oder ein sonstiges Arbeitsgerät. Weiterhin besteht im Rahmen der Erfindung die Möglichkeit, dass das Nutzfahrzeug ganz oder teilweise hybridisiert ist, beispielsweise mit einer Kombination Verbrennungsmotor-elektrischer Generator-Radelektromotoren als Alternative zu einer Kombination Verbrennungsmotor-Getriebe-Radteil.

Die Erfindung betrifft also in dem bevorzugten Ausführungsbeispiel den Betrieb eines Nutzfahrzeugs zur Güter- oder Personenbeförderung mit einer zulässigen Höchstgeschwindigkeit von mehr als 60 km/h (EG-Richtlinie 70/156/EWG Klasse N2, N3, M2, M3) mit einem hydrostatischen Hilfsantrieb.

Schließlich beansprucht die Erfindung auch Schutz für ein entsprechendes Betriebsverfahren, wie sich bereits aus der vorstehenden Beschreibung ergibt, so dass auf eine separate Beschreibung des erfindungsgemäßen Betriebsverfahrens verzichtet wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Darstellung eines ersten Ausführungsbeispiels eines erfindungsgemäßen Fahrzeugsantriebs mit einem hydrostatischen Hilfsantrieb, der eine gelenkte Vorderachse antreibt,
- Figur 2: ein zweites Ausführungsbeispiel eines erfindungsgemäßen Fahrzeugantriebs mit einem hydrostatischen Hilfsantrieb, der eine gelenkte Vorderachse und eine Nachlaufachse antreibt,
- Figur 3: ein Flussdiagramm zur Verdeutlichung der kontinuierlichen Prüfung auf eine mögliche Deaktivierung des Hilfsantriebs, und
- Figur 4: ein Flussdiagramm zur Verdeutlichung der laufenden Prüfung auf eine mögliche Aktivierung des hydrostatischen Hilfsantriebs, sowie
- Figur 5: ein Flussdiagramm zur Verdeutlichung des sogenannten "Torque Vectoring bzw. einer adaptierbaren Quersperre.

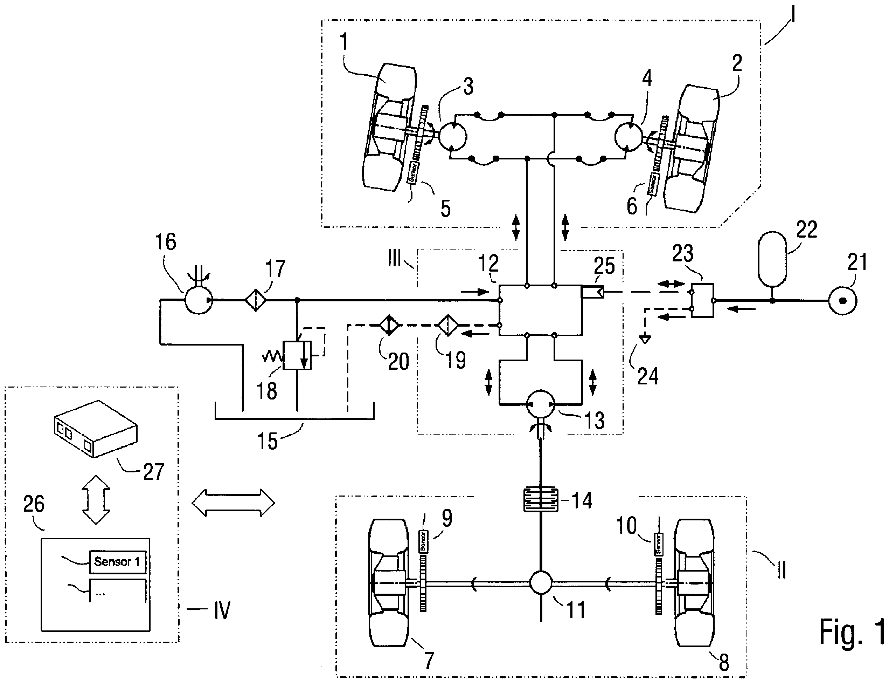

Figur 1 zeigt ein erstes Ausführungsbeispiel eines erfindungsgemäßen Fahrzeugantriebs mit einer lenkbaren Hilfsantriebsachse I mit einem hydrostatischen Hilfsantrieb, einer Hauptantriebsachse II, einer Pumpeneinheit III und einer elektronischen Steuereinheit IV.

Die Hilfsantriebsachse I umfasst ein lenkbares linkes Fahrzeugrad 1 und ein lenkbares rechtes Fahrzeugrad 2, wobei das linke Fahrzeugrad 1 von einem Hydraulikmotor 3 angetrieben werden kann, während das rechte Fahrzeugrad 2 von einem separaten Hydraulikmotor 4 angetrieben werden kann. Die Drehzahl des linken Fahrzeugrades 1 und die Drehzahl des rechten Fahrzeugrades 2 wird durch jeweils einen Drehzahlsensor 5 bzw. 6 gemessen, welche unter Umständen in Form eines ABS-Sensors schon im Fahrzeug vorhanden sein können, und an die elektronische Steuereinheit IV übertragen, wobei die elektronische Steuereinheit IV die gemessenen Drehzahlwerte bei der Steuerung/Regelung des hydrostatischen Hilfsantriebs berücksichtigt, wie noch detailliert beschrieben wird.

Die Hauptantriebsachse II wird über eine zwischengeschaltete Kraftübertragungseinheit von einem Verbrennungsmotor (z.B. Dieselmotor) angetrieben, wobei der Verbrennungsmotor in der Zeichnung nicht dargestellt ist. Die Hauptantriebsachse II umfasst ebenfalls ein linkes Fahrzeugrad 7 und ein rechtes Fahrzeugrad 8, die beide in diesem Ausführungsbeispiel nicht lenkbar sind. Die Drehzahl des linken Fahrzeugrades 7 und des rechten Fahrzeugrades 8 wird jeweils durch einen Drehzahlsensor 9 bzw. 10 gemessen, wobei die gemessenen Drehzahlwerte an die Steuereinheit IV übertragen werden, damit die Steuereinheit IV die gemessenen Drehzahlwerte bei der Steuerung/Regelung des hydrostatischen Hilfsantriebs berücksichtigen kann, wie noch detailliert beschrieben wird.

Weiterhin umfasst die Hauptantriebsachse II ein Hinterachsdifferential 11, was an sich aus dem Stand der Technik bekannt ist.

Die Pumpeneinheit III umfasst eine Steuereinheit 12 mit hydraulischen Steuer- und Regelventilen zur Ansteuerung der beiden Hydraulikmotoren 3, 4 der Hilfsantriebsachse I.

Darüber hinaus umfasst die Pumpeneinheit III eine hydraulische Konstantpumpe 13, die umkehrbar ist und über eine schaltbare Reibkupplung 14 mit dem Hinterachsdifferential 11 verbunden ist, so dass die hydraulische Konstantpumpe 13 von der Hauptantriebsachse II angetrieben wird.

Zur Hydraulikversorgung der Pumpeneinheit III sind beispielhaft Komponenten eines möglichen Speisekreises aufgezeigt. Dazu zählen typischerweise, aber nicht exklusiv, ein Ölbehälter 15, eine Speisepumpe 16, ein Filter (hier ausgebildet als Niederdruckfilter 17), eine Systemabsicherung, wahlweise ausgebildet als ein Druckbegrenzungsventil 18 und einen Rücklauf mit einem wahlweisen Rücklauffilter 19 und einem wahlweisen Wärmetauscher 20 (Kühler) auf.

Zur Vorsteuerung der Pumpeneinheit III umfasst der erfindungsgemäße Fahrzeugantrieb beispielhaft eine pneumatische Druckquelle 21, einen optionalen Druckspeicher 22, ein pneumatisches Steuerventil 23, eine Entlüftung 24 und eine pneumatisch betätigte Vorsteuereinheit 25. Alternativ kann die Ansteuerung auch rein hydraulisch und/oder elektromagnetisch erfolgen.

Die elektronische Steuereinheit IV umfasst zum einen eine Fahrzeugsensorik 26 und zum anderen eine elektronische Steuereinheit 27, welche die elektronischen Steuerungsfunktionen implementiert.

Die Fahrzeugsensorik 26 umfasst zum einen die Drehzahlsensoren 5, 6, 9, 10 und darüber hinaus weitere Sensoren, die Betriebsgrößen des Fahrzeugs erfassen, wie beispielsweise die Fahrzeuggeschwindigkeit, die Fahrzeugbeschleunigung in Fahrzeuglängsrichtung und Fahrzeugquerrichtung, die Fahrzeugposition, den Fahrzeugneigungswinkel in Längs- und Querrichtung, die Rad- bzw. Achslast, die Öltemperatur, den Öldruck, den Ölvolumenstrom, die Umgebungstemperatur, die Luftfeuchtigkeit sowie die elektronische Auswertung eines Kamerabildes der Umgebung, um daraus Rückschlüsse auf den Reibwert des Fahruntergrundes ziehen zu können.

Die Steuereinheit 27 wertet die von der Fahrzeugsensorik 26 gemessenen Betriebsgrößen des Fahrzeugs aus, um in Abhängigkeit davon den hydrostatischen Hilfsantrieb bzw. zu regeln/steuern. Zur Steuerung/Regelung sendet die Steuereinheit IV entsprechende Steuersignale an die Reibkupplung 14 und die Pumpeneinheit III, die daraufhin die Hochdruckpumpe 13 sowie die Hydraulikmotoren 3, 4 entsprechend ansteuert.

Beispielsweise aktiviert die Steuereinheit IV den hydrostatischen Hilfsantrieb, wenn die gemessene Drehzahl an der Hilfsantriebsachse I von der gemessenen Drehzahl an der Hauptantriebsachse II abweicht, was auf ein Durchdrehen der Hauptantriebsachse II oder zumindest auf einen übermäßigen Schlupf an der Hauptantriebsachse II schließen lässt. In einem weiteren Beispiel aktiviert die Steuereinheit IV den hydrostatischen Hilfsantrieb, wenn an der Hauptantriebsachse II die Drehzahl an der linken Radseite unzulässig von der Drehzahl an der rechten Seite abweicht. Eine unzulässige Drehzahldifferenz zwischen linker und rechter Seite lässt auf übermäßigen Schlupf an der Hauptantriebsachse schließen.

Darüber hinaus misst die Steuereinheit IV über einen Beschleunigungssensor der Fahrzeugsensorik 26 einen Ist-Wert der Fahrzeugbeschleunigung und vergleicht diesen Ist-Wert mit einem Vergleichs-Wert der Fahrzeugbeschleunigung, der aus den gemessenen Drehzahlen an der Hauptantriebsachse II abgeleitet wird. Bei einem Durchdrehen der Hauptantriebsachse II weichen diese Werte voneinander ab, so dass die Steuereinheit IV den hydrostatischen Hilfsantrieb dann aktiviert.

Darüber hinaus ermittelt die Steuereinheit IV - wie bereits kurz erwähnt wurde - einen Schätzwert für den Reibwert der Straße, wobei die Steuereinheit IV beispielsweise Messwerte der Umgebungstemperatur, der Luftfeuchtigkeit, der Position des Fahrzeugs und die elektronische Auswertung eines Kamerabildes des Fahruntergrundes berücksichtigen kann. Die Steuereinheit IV aktiviert dann den hydrostatischen Hilfsantrieb, wenn der Schätzwert für den Reibwert der Straße auf Straßenglätte schließen lässt.

Darüber hinaus aktiviert die Steuereinheit IV den hydrostatischen Hilfsantrieb dann, wenn die von der Fahrzeugsensorik 26 gemessene Querbeschleunigung des Fahrzeugs einen bestimmten Grenzwert überschreitet.

Darüber hinaus erfasst die Steuereinheit IV auch den Lenkwinkel der Hilfsantriebsachse I und berechnet daraus in Verbindung mit der gemessenen Fahrzeuggeschwindigkeit einen Vergleichs-Wert für die Querbeschleunigung. Die Steuereinheit IV vergleicht diesen Vergleichs-Wert für die Querbeschleunigung dann mit einem gemessenen Ist-Wert der Querbeschleunigung und aktiviert den hydrostatischen Hilfsantrieb, wenn Vergleichs-Wert und Ist-Wert der Querbeschleunigung eine Abweichung zeigen.

Schließlich erfasst die Steuereinheit IV noch mittels der Fahrzeugsensorik 26 den Neigungswinkel des Fahrzeugs sowie die einzelnen Achs- bzw. Radlasten und aktiviert den hydrostatischen Hilfsantrieb I, wenn der gemessene Neigungswinkel einen bestimmten Grenzwert überschreitet bzw. die Auswertung der Radlastanalyse zeigt, dass das gegebene Antriebsmoment nicht allein über die Hauptantriebsachse II übertragen werden kann.

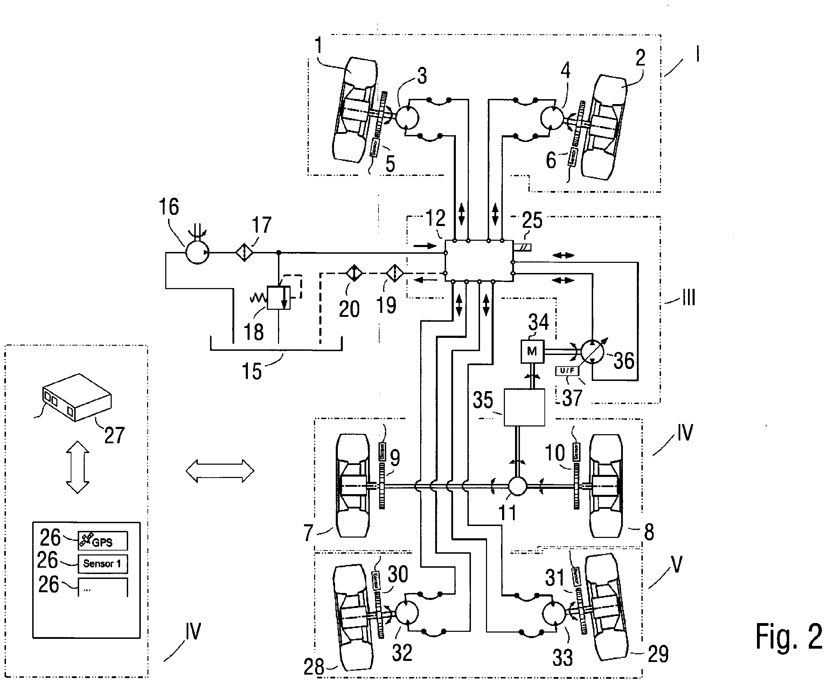

Das Ausführungsbeispiel gemäß Figur 2 stimmt teilweise mit dem vorstehend beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht zunächst darin, dass hinter der Hauptantriebsachse II eine weitere Hilfsantriebsachse V angeordnet ist, wobei es sich um eine lenkbare Achse handelt, die ebenfalls von einem hydrostatischen Hilfsantrieb antreibbar ist. Die Hilfsantriebsachse V umfasst ebenfalls ein linkes Fahrzeugrad 28, ein rechtes Fahrzeugrad 29 mit jeweils einem Drehzahlsensor 30, 31 und jeweils einem Hydraulikmotor 32, 33.

Weiterhin ist in dieser Zeichnung der eigentliche Antriebsmotor 34 dargestellt, der vorzugsweise als Dieselmotor realisiert ist und über ein Getriebe 35 das Hinterachsdifferential 11 der Hauptantriebsachse II antreibt.

Darüber hinaus treibt der Antriebsmotor 34 eine hydraulische und umkehrbare Verstellpumpe 36 an, die beispielhaft über eine elektromagnetische Verstelleinrichtung 37 eingestellt werden kann, um den von der Verstellpumpe 36 geförderten Volumenstrom einzustellen.

Darüber hinaus ist aus der Zeichnung ersichtlich, dass die verschiedenen Hydraulikmotoren 3, 4, 32, 33 unabhängig voneinander angesteuert werden. Jedem der Fahrzeugräder 1, 2 und 28, 29 der beiden Hilfsantriebsachsen I, V ist also jeweils ein Hydraulikmotor 3, 4, 32 bzw. 33 zugeordnet, so dass die von dem hydrostatischen Hilfsantrieb erzeugte Antriebskraft für die einzelnen Fahrzeugräder 1, 2, 28, 29 der beiden Hilfsantriebsachsen I, V unabhängig voneinander eingestellt werden kann.

Dies ermöglicht vorteilhaft den Einsatz des hydrostatischen Hilfsantriebs im Rahmen des sogenannten "Torque Vectoring", indem die Antriebskraft des hydrostatischen Hilfsantriebs zwischen linker Fahrzeugseite und rechter Fahrzeugseite variiert wird, um die Kurvendynamik zu verbessern oder eine Lenkunterstützung zu bewirken. Alternativ kann dazu auch eine adaptierbare Quersperre dargestellt werden.

Ansonsten arbeitet dieses Ausführungsbeispiel in gleicher bzw. ähnlicher Weise wie das vorstehend beschriebene Ausführungsbeispiel gemäß Figur 1.

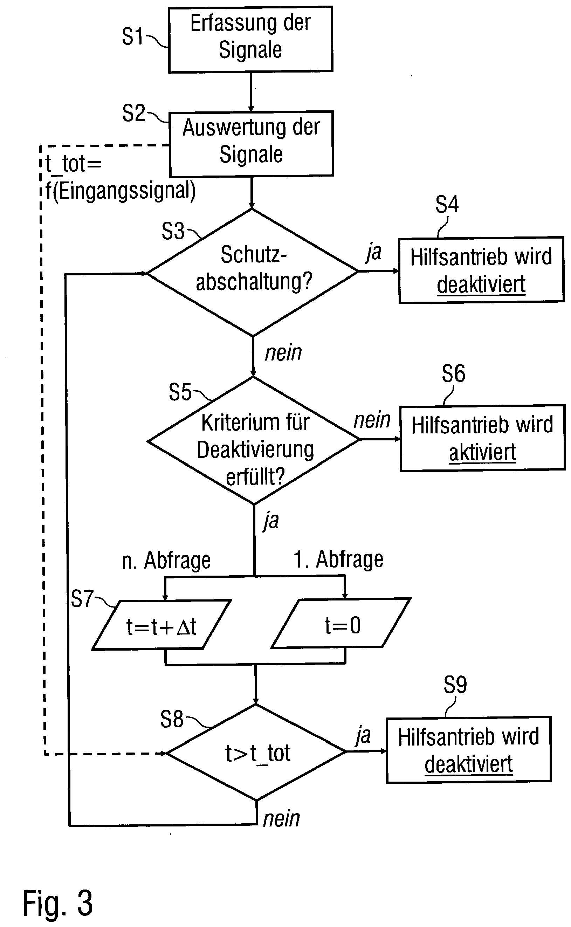

Figur 3 zeigt ein Flussdiagramm, das in stark vereinfachter, schematischer Form verdeutlicht, wie die Steuereinheit IV im Betrieb laufend prüft, ob der hydrostatische Hilfsantrieb deaktiviert werden soll.

In einem ersten Schritt S1 werden von der Fahrzeugsensorik 26 laufend Betriebsgrößen des Fahrzeugs gemessen, wie bereits vorstehend beschrieben wurde.

In einem Schritt S2 wertet die Steuereinheit IV dann die gemessenen Betriebsgrößen aus, um anschließend in Schritt S3 bzw. in Schritt S5 überprüfen zu können, ob der hydrostatische Hilfsantrieb deaktiviert werden soll. Im Rahmen dieser Auswertung erfolgt beispielsweise eine signaltechnische Aufbereitung durch Signalfilterung oder mathematische Operationen.

In einem Schritt S3 wird dann anschließend geprüft, ob aus Sicherheitsgründen eine Schutzabschaltung erforderlich ist. Dies kann beispielsweise der Fall sein, wenn die Temperatur im Hydrauliksystem einen bestimmten Maximalwert überschreitet oder wenn die Fahrzeuggeschwindigkeit außerhalb eines zulässigen Bereichs liegt. Falls dies der Fall ist, so erfolgt in einem Schritt S4 eine Deaktivierung des hydrostatischen Hilfsantriebs.

Andernfalls wird in einem Schritt S5 geprüft, ob eine normale Abschaltung (Deaktivierung) des hydrostatischen Hilfsantriebs erforderlich ist.

Falls dies nicht der Fall ist, so ist die Deaktivierungsprüfung vorläufig beendet und der Hilfsantrieb bleibt aktiviert (Schritt S6), wobei die Deaktivierungsprüfung im Betrieb bei eingeschaltetem hydrostatischen Hilfsantrieb laufend wiederholt wird.

Falls dagegen die Bedingungen für eine normale Abschaltung (Deaktivierung) des hydrostatischen Hilfsantriebs erfüllt sind, so wird in einem Schritt S7 ein Zeitgeber t hochgezählt, bis in einem Schritt S8 ermittelt wird, dass eine bestimmte Totzeit t_{TOT} erreicht ist, wobei in einer Schleife laufend überprüft wird, ob die Voraussetzungen für eine normale Abschaltung erfüllt sind. Falls also die Voraussetzungen für eine normale Abschaltung während einer Totzeit t_{TOT} durchgehend erfüllt sind, so erfolgt eine Deaktivierung des hydrostatischen Hilfsantriebs in dem Schritt S9. Der Hilfsantrieb wird also nur dann deaktiviert, wenn die Voraussetzungen für eine Abschaltung während der Totzeitdauer t_{TOT} durchgehend erfüllt sind. Dadurch wird verhindert, dass der hydrostatische Hilfsantrieb kurzzeitig abgeschaltet und sofort wieder angeschaltet wird, da dies nicht erwünscht ist.

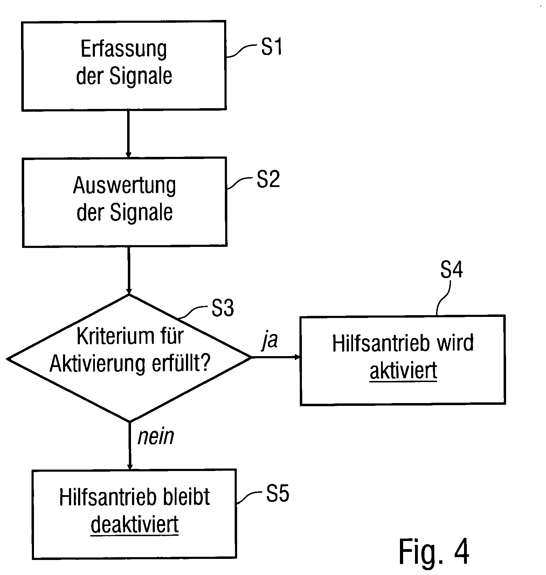

Figur 4 zeigt ein Flussdiagramm, das die Aktivierungsprüfung verdeutlicht, die von der Steuereinheit IV im Betrieb bei abgeschaltetem hydrostatischen Hilfsantrieb laufend durchgeführt wird.

In einem Schritt S1 misst die Steuereinheit IV mittels der Fahrzeugsensorik 26 zahlreiche Betriebsgrößen des Fahrzeugs, die dann in einem Schritt S2 von der Steuereinheit 27 ausgewertet werden.

In einem Schritt S3 überprüft die Steuereinheit 27 dann, ob die Bedingungen für eine Zuschaltung des hydrostatischen Hilfsantriebs erfüllt sind.

Falls dies der Fall ist, so wird in einem Schritt S4 der hydrostatische Hilfsantrieb zugeschaltet.

Andernfalls bleibt der hydrostatische Hilfsantrieb deaktiviert (Schritt S5).

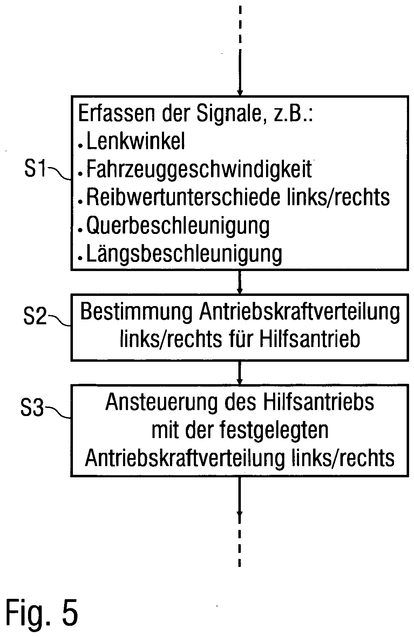

Schließlich zeigt Figur 5 ein Flussdiagramm, das in stark vereinfachter schematischer Form das sogenannte "Torque Vectoring" verdeutlicht, das zur Lenkunterstützung oder zur Verbesserung der Kurvendynamik des Fahrzeugs dient. Darüber hinaus verdeutlicht dieses Flussdiagramm auch die Funktionsweise einer adaptiven Quersperre.

In einem ersten Schritt S1 werden dabei wieder zahlreiche Sensorgrößen von der Fahrzeugsensorik 26 gemessen.

In einem zweiten Schritt S2 berechnet die Steuereinheit 27 dann in Abhängigkeit von den gemessenen Betriebsgrößen eine vorteilhafte Antriebskraftverteilung zwischen der linken Fahrzeugseite und der rechten Fahrzeugseite.

Anschließend steuert die Steuereinheit IV dann die einzelnen Hydraulikmotoren 3, 4, 32, 33 des hydrostatischen Hilfsantriebs so an, dass die gewünschte Antriebskraftverteilung zwischen linker Fahrzeugseite und rechter Fahrzeugseite erreicht wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste:

- I: Hilfsantriebsachse
- II: Hauptantriebsachse
- III: Pumpeneinheit
- IV: Steuereinheit, elektronisch, mit Sensorik
- V: Hilfsantriebsache
- 1: Linkes Fahrzeugrad der Hilfsantriebsachse
- 2: Rechtes Fahrzeugrad der Hilfsantriebsachse
- 3: Hydraulikmotor
- 4: Hydraulikmotor
- 5: Drehzahlsensor
- 6: Drehzahlsensor
- 7: Linkes Fahrzeugrad der Hauptantriebsachse
- 8: Rechtes Fahrzeugrad der Hauptantriebsachse
- 9: Drehzahlsensor
- 10: Drehzahlsensor
- 11: Hinterachsdifferential
- 12: Steuereinheit, hydraulisch
- 13: Hydraulische Konstantpumpe
- 14: Schaltbare Reibkupplung
- 15: Ölbehälter
- 16: Speisepumpe
- 17: Niederdruckfilter
- 18: Druckbegrenzungsventil
- 19: Rücklauffilter
- 20: Wärmetauscher
- 21: Pneumatische Druckquelle
- 22: Druckspeicher
- 23: Pneumatisches Steuerventil
- 24: Entlüftung
- 25: Vorsteuereinheit
- 26: Fahrzeugsensorik
- 27: Steuereinheit, elektronisch
- 28: Linkes Fahrzeugrad
- 29: Rechtes Fahrzeugrad
- 30: Drehzahlsensor
- 31: Drehzahlsensor
- 32: Hydraulikmotor
- 33: Hydraulikmotor
- 34: Antriebsmotor
- 35: Getriebe
- 36: Verstellpumpe
- 37: Elektro-mechanische Verstelleinrichtung

## Patentansprüche

1. Fahrzeugantrieb für ein Fahrzeug, insbesondere für ein Nutzfahrzeug, mit
a) einem Hauptantrieb (34) für das Fahrzeug, insbesondere mit einem Verbrennungsmotor,
b) einem hydrostatischen Hilfsantrieb (3, 4, 32, 33) für das Fahrzeug und
c) einer Steuereinheit (IV), die mindestens eine Betriebsgröße des Fahrzeugs erfasst, insbesondere zur automatischen Deaktivierung des hydrostatischen Hilfsantriebs (3, 4, 32, 33) in Abhängigkeit von der mindestens einen Betriebsgröße des Fahrzeugs,
wobei:
d) die Steuereinheit (IV) den hydrostatischen Hilfsantrieb (3, 4, 32, 33) in Abhängigkeit von der mindestens einen Betriebsgröße automatisch steuert oder regelt,
e) der Hauptantrieb (34) eine Hauptantriebsachse (II) des Fahrzeugs antreibt, **dadurch gekennzeichnet,**
f) dass ein Drehzahlsensor (9, 10) als Betriebsgröße des Fahrzeugs die Drehzahl der Hauptantriebsachse (II) misst,
g) dass ein Beschleunigungssensor (26) als Betriebsgröße des Fahrzeugs einen Ist-Wert der positiven oder negativen Fahrzeuglängsbeschleunigung misst,
h) dass die Steuereinheit (IV) aus der gemessenen Drehzahl der Hauptantriebsachse (II) einen Vergleichs-Wert der positiven oder negativen Fahrzeuglängsbeschleunigung berechnet, und
i) dass die Steuereinheit (IV) den hydrostatischen Hilfsantrieb (3, 4, 32, 33) steuert oder regelt, wenn der gemessene Ist-Wert der positiven oder negativen Fahrzeuglängsbeschleunigung von dem berechneten Vergleichs-Wert der positiven oder negativen Fahrzeuglängsbeschleunigung abweicht.

2. Fahrzeugantrieb nach Anspruch 1, **dadurch gekennzeichnet,**
a) **dass** der hydrostatische Hilfsantrieb (3, 4, 32, 33) eine Hilfsantriebsachse (I, V) des Fahrzeugs antreibt,
b) **dass** Drehzahlsensoren (5, 6, 9, 10, 30, 31) als Betriebsgröße des Fahrzeugs die Drehzahlen der Hauptantriebsachse (II) und der Hilfsantriebsachse (I, V) messen,
c) **dass** die Steuereinheit (IV) die Drehzahldifferenzen ermittelt zwischen den Drehzahlen der Fahrzeugräder an der Hauptantriebsachse (II) und den Drehzahlen der Fahrzeugräder an der Hilfsantriebsachse (I, V), und
d) **dass** die Steuereinheit (IV) den hydrostatischen Hilfsantrieb (3, 4, 32, 33) in Abhängigkeit von der ermittelten Drehzahldifferenz
d1) zwischen der Hauptantriebsachse (II) und der Hilfsantriebsachse (I, V) und/oder
d2) zwischen linker und rechter Fahrzeugseite
automatisch steuert oder regelt.

3. Fahrzeugantrieb nach einem der vorhergehenden Ansprüche,
**dadurch gekennzeichnet,**
a) **dass** die Steuereinheit (IV) in Abhängigkeit von den gemessenen Betriebsgrößen des Fahrzeugs einen Schätzwert für den Reibwert der Straße bestimmt, insbesondere in Abhängigkeit von folgenden Betriebsgrößen:
a1) Umgebungstemperatur,
a2) Position des Fahrzeugs,
a3) Luftfeuchtigkeit,
a4) Uhrzeit, und/oder
a5) Kamerabild der Straße, und
b) **dass** die Steuereinheit (IV) den hydrostatischen Hilfsantrieb (3, 4, 32, 33) in Abhängigkeit von dem Schätzwert des Reibwerts der Straße steuert oder regelt.

4. Fahrzeugantrieb nach einem der vorhergehenden Ansprüche,
**dadurch gekennzeichnet,**
a) **dass** ein Querbeschleunigungssensor (26) als Betriebsgröße des Fahrzeugs die Querbeschleunigung des Fahrzeugs misst, und
b) **dass** die Steuereinheit (IV) den hydrostatischen Hilfsantrieb (3, 4, 32, 33) steuert oder regelt, wenn die Querbeschleunigung des Fahrzeugs einen bestimmten Grenzwert überschreitet.

5. Fahrzeugantrieb nach einem der vorhergehenden Ansprüche,
**dadurch gekennzeichnet,**
a) **dass** ein Querbeschleunigungssensor (26) als Betriebsgröße des Fahrzeugs die Querbeschleunigung des Fahrzeugs misst, und
b) **dass** ein Lenkwinkelsensor (26) den Lenkwinkel einer gelenkten Fahrzeugachse misst, und
c) **dass** die Steuereinheit (IV) die Querbeschleunigung des Fahrzeugs mit dem Lenkwinkel vergleicht und den hydrostatischen Hilfsantrieb (3, 4, 32, 33) in Abhängigkeit von dem Vergleich steuert oder regelt.

6. Fahrzeugantrieb nach einem der vorhergehenden Ansprüche,
**dadurch gekennzeichnet,**
a) **dass** ein Neigungssensor (26) als Betriebsgröße des Fahrzeugs den Neigungswinkel des Fahrzeugs in Fahrzeuglängsrichtung und/oder in Fahrzeugquerrichtung misst, und/oder
b) **dass** ein Radlastsensor (26) als Betriebsgröße des Fahrzeugs die Radlast des Fahrzeugs misst und
c) **dass** die Steuereinheit (IV) den hydrostatischen Hilfsantrieb (3, 4, 32, 33) steuert oder regelt, wenn der Neigungswinkel des Fahrzeugs und/oder die Radlast eines Fahrzeugrades einen bestimmten Grenzwert überschreitet.

7. Fahrzeugantrieb nach einem der vorhergehenden Ansprüche,
**dadurch gekennzeichnet,**
a) **dass** die Steuereinheit (IV) zur Lenkunterstützung und/oder zur Verbesserung der Kurvendynamik eine Antriebskraftverteilung zwischen linker und rechter Fahrzeugseite berechnet, insbesondere in Abhängigkeit von folgenden Betriebsgrößen des Fahrzeugs:
a1) Lenkwinkel,
a2) Fahrzeuggeschwindigkeit, und/oder
a3) Reibwertunterschieden der Straße zwischen linker und rechter Fahrzeugseite, und
b) **dass** die Steuereinheit (IV) Hydraulikmotoren (3, 4, 32, 33) an der linken Fahrzeugseite und an der rechten Fahrzeugseite mit der berechneten Antriebskraftverteilung ansteuert, um die Kurvendynamik zu verbessern und/oder zur Lenkunterstützung.

8. Fahrzeugantrieb nach einem der vorhergehenden Ansprüche,
**dadurch gekennzeichnet,**
a) **dass** der Hauptantrieb (34) die Fahrzeugräder (7, 8) einer Hauptantriebsachse (II) des Fahrzeugs antreibt,
b) **dass** der hydrostatische Hilfsantrieb (3, 4) die Fahrzeugräder (1, 2) einer ersten Hilfsantriebsachse (I) des Fahrzeugs antreibt, und
c) **dass** der hydrostatische Hilfsantrieb (32, 33) zusätzlich die Fahrzeugräder (28, 29) einer zweiten Hilfsantriebsachse (V) des Fahrzeugs antreibt.

9. Fahrzeugantrieb nach Anspruch 8, **dadurch gekennzeichnet,**
a) **dass** die erste Hilfsantriebsachse (I) eine gelenkte Vorderachse des Fahrzeugs ist, und/oder
b) **dass** die zweite Hilfsantriebsachse (V) eine liftbare Fahrzeugachse ist, deren Fahrzeugräder von der Fahrbahn abgehoben werden können, wenn kein Bedarf besteht, und/oder
c) **dass** die zweite Hilfsantriebsachse (V) eine Nachlaufachse ist, die in Fahrtrichtung hinter der Hauptantriebsachse (II) angeordnet ist, oder
d) **dass** die zweite Hilfsantriebsachse (V) eine Vorlaufachse ist, die in Fahrtrichtung vor der Hauptantriebsachse (II) angeordnet ist.

10. Fahrzeugantrieb nach Anspruch 8, **dadurch gekennzeichnet,**
a) **dass** die Hauptantriebsachse (II) eine erste Hinterachse ist, und
b) **dass** die Hilfsantriebsachse (I, V) eine zweite Hinterachse ist,
c) **dass** die Hilfsantriebsachse (I, V) in Fahrtrichtung als Vorlaufachse vor oder als Nachlaufachse hinter der Hauptantriebsachse (II) angeordnet ist.

11. Fahrzeugantrieb nach einem der vorhergehenden Ansprüche,
**dadurch gekennzeichnet,**
a) **dass** der Fahrzeugantrieb zwei Achsen aufweist, nämlich
a1) eine gelenkte Vorderachse mit dem Hilfsantrieb und
a2) eine Hauptantriebsachse mit dem Hauptantrieb, oder
b) **dass** der Fahrzeugantrieb drei Achsen aufweist, nämlich
b1) eine gelenkte Vorderachse mit dem Hilfsantrieb,
b2) eine Hauptantriebsachse mit dem Hauptantrieb und
b3) eine nicht angetriebene Vorlaufachse, wobei die Vorlaufachse lenkbar oder nicht lenkbar und liftbar oder nicht liftbar ist, oder
c) **dass** der Fahrzeugantrieb drei Achsen aufweist, nämlich
c1) eine gelenkte Vorderachse mit dem Hilfsantrieb,
c2) eine Hauptantriebsachse mit dem Hauptantrieb und
c3) eine Vorlaufachse mit einem Hilfsantrieb, wobei die Vorlaufachse lenkbar oder nicht lenkbar und liftbar oder nicht liftbar ist, oder
d) **dass** der Fahrzeugantrieb drei Achsen aufweist, nämlich
d1) eine gelenkte, nicht angetriebene Vorderachse,
d2) eine Hauptantriebsachse mit dem Hauptantrieb und
d3) eine Vorlaufachse mit dem Hilfsantrieb, wobei die Vorlaufachse lenkbar oder nicht lenkbar und liftbar oder nicht liftbar ist, oder
e) **dass** der Fahrzeugantrieb drei Achsen aufweist, nämlich
e1) eine gelenkte Vorderachse mit dem Hilfsantrieb,
e2) eine Hauptantriebsachse mit dem Hauptantrieb und
e3) eine nicht angetriebene Nachlaufachse, wobei die Nachlaufachse lenkbar oder nicht lenkbar und liftbar oder nicht liftbar ist, oder
f) **dass** der Fahrzeugantrieb drei Achsen aufweist, nämlich
f1) eine gelenkte Vorderachse mit dem Hilfsantrieb,
f2) eine Hauptantriebsachse mit dem Hauptantrieb und
f3) eine Nachlaufachse mit einem Hilfsantrieb, wobei die Nachlaufachse lenkbar oder nicht lenkbar und liftbar oder nicht liftbar ist, oder
g) **dass** der Fahrzeugantrieb drei Achsen aufweist, nämlich
g1) eine gelenkte Vorderachse ohne Antrieb,
g2) eine Hauptantriebsachse mit dem Hauptantrieb und
g3) eine Nachlaufachse mit dem Hilfsantrieb, wobei die Nachlaufachse lenkbar oder nicht lenkbar und liftbar oder nicht liftbar ist, oder
h) **dass** der Fahrzeugantrieb vier Achsen aufweist, nämlich
h1) eine gelenkte Vorderachse mit oder ohne Hilfsantrieb,
h2) eine Hauptantriebsachse mit dem Hauptantrieb,
h3) eine Vorlaufachse und
h4) eine Nachlaufachse, wobei die Vorlaufachse und die Nachlaufachse lenkbar oder nicht lenkbar und liftbar oder nicht liftbar ist und mit oder ohne Hilfsantrieb ausgeführt ist, oder
i) **dass** der Fahrzeugantrieb vier Achsen aufweist, nämlich
i1) eine erste gelenkte Vorderachse mit oder ohne Hilfsantrieb,
i2) eine zweite gelenkte Vorderachse mit oder ohne Hilfsantrieb, wobei die zweite Vorderachse liftbar oder nicht liftbar ist,
i3) eine Hauptantriebsachse mit dem Hauptantrieb,
i4) eine Nachlaufachse mit oder ohne Hilfsantrieb, wobei die Nachlaufachse lenkbar oder nicht lenkbar und liftbar oder nicht liftbar ist.

12. Fahrzeugantrieb nach einem der vorhergehenden Ansprüche, **dadurch gekennzeichnet,**
a) **dass** der hydrostatische Hilfsantrieb (3, 4, 32, 33) eine Hochdruckpumpe (13, 36) aufweist, und
b) **dass** die Steuereinheit (IV) den Volumenstrom des hydrostatischen Hilfsantriebs (3, 4, 32, 33) einstellt, wobei
b1) die Hochdruckpumpe (36) eine Verstellpumpe ist, um den Volumenstrom einstellen zu können oder
b2) der Volumenstrom von der Steuereinheit (IV) durch Verstellglieder eingestellt wird, falls die Hochdruckpumpe (13) ein konstantes Schluckvolumen aufweist.

13. Fahrzeugantrieb nach einem der vorhergehenden Ansprüche, **dadurch gekennzeichnet,**
a) **dass** der hydrostatische Hilfsantrieb (3, 4, 32, 33) mehrere Hydraulikmotoren (3, 4, 32, 33) aufweist, die jeweils ein Fahrzeugrad (1, 2, 28, 29) antreiben, und
b) **dass** die Steuereinheit (IV) die einzelnen Hydraulikmotoren (3, 4, 32, 33) unabhängig voneinander ansteuert.

14. Fahrzeugantrieb nach einem der vorhergehenden Ansprüche, **dadurch gekennzeichnet, dass** die von der Steuereinheit (IV) erfassten Betriebsgrößen des Fahrzeugs mindestens eine der folgenden Betriebsgrößen umfassen:
a) Fahrzeuggeschwindigkeit,
b) Fahrzeugbeschleunigung in Fahrzeuglängsrichtung und/oder in Fahrzeugquerrichtung,
c) Fahrzeugposition,
d) Fahrzeugneigungswinkel, insbesondere Längsneigung und/oder Querneigung des Fahrzeugs
e) Öltemperatur,
f) Öldruck,
g) Ölvolumenstrom,
h) Differenzdrehzahl zwischen den Drehzahlen der Fahrzeugräder derselben Fahrzeugachse,
i) Differenzdrehzahl zwischen den Drehzahlen verschiedener Fahrzeugachsen,
j) Umgebungstemperatur,
k) Luftfeuchtigkeit,
l) Bild einer Fahrzeugkamera,
m) Individuelle Radlasten am Fahrzeug.

15. Fahrzeug, insbesondere Nutzfahrzeug, mit einem Fahrzeugantrieb nach einem der vorhergehenden Ansprüche.

16. Betriebsverfahren für einen Fahrzeugantrieb nach einem der Ansprüche 1 bis 14, **dadurch gekennzeichnet, dass** der hydrostatische Hilfsantrieb (3, 4, 32, 33) in Abhängigkeit von mindestens einer Betriebsgröße des Fahrzeugs automatisch gesteuert oder geregelt wird.

## Claims

1. A vehicle drive for a vehicle, in particular for a commercial vehicle, having
a) a primary drive (34) for the vehicle, having in particular an internal combustion engine;
b) a hydrostatic auxiliary drive (3, 4, 32, 33) for the vehicle; and
c) a control unit (IV) which detects at least one operating variable of the vehicle, in particular for automatically deactivating the hydrostatic auxiliary drive (3, 4, 32, 33) as a function of the at least one operating variable of the vehicle;
wherein:
d) the control unit (IV) by open loop or closed loop automatically controls the hydrostatic auxiliary drive (3, 4, 32, 33) as a function of the at least one operating variable;
e) the primary drive (34) drives a primary drive axle (II) of the vehicle,
**characterized in that**
f) a revolution sensor (9, 10) measures the rotating speed of the primary drive axle (II) as an operating variable of the vehicle;
g) an acceleration sensor (26) measures an actual value of the positive or negative vehicle longitudinal acceleration as an operating variable of the vehicle;
h) the control unit (IV) from the measured rotating speed of the primary drive axle (II) computes a reference value of the positive or negative vehicle longitudinal acceleration; and
i) the control unit (IV) by open loop or closed loop controls the hydrostatic auxiliary drive (3, 4, 32, 33) when the actual value of the positive or negative vehicle longitudinal acceleration deviates from the computed reference value of the positive or negative vehicle longitudinal acceleration.

2. The vehicle drive according to Claim 1, **characterized in that**
a) the hydrostatic auxiliary drive (3, 4, 32, 33) drives an auxiliary drive axle (I, V) of the vehicle;
b) revolution sensors (5, 6, 9, 10, 30, 31) measure the rotating speeds of the primary drive axle (II) and of the auxiliary drive axle (I, V) as an operating variable of the vehicle;
c) the control unit (IV) ascertains the difference in terms of rotating speed between the rotating speeds of the vehicle road wheels on the primary drive axle (II) and the rotating speeds of the vehicle road wheels on the auxiliary drive axle (I, V); and
d) the control unit (IV) by open loop or closed loop automatically controls the hydrostatic auxiliary drive (3, 4, 32, 33) as a function of the difference in terms of rotating speed ascertained
d1) between the primary drive axle (II) and the auxiliary drive axle (I, V); and/or
d2) between the left side and the right side of the vehicle.

3. The vehicle drive according to one of the preceding claims,
**characterized in that**
a) the control unit (IV) determines an estimated value for the coefficient of friction of the road as a function of the measured operating variables of the vehicle, in particular as a function of the following operating values:
a1) ambient temperature;
a2) position of the vehicle;
a3) air humidity;
a4) time of day; and/or
a5) camera image of the road; and
**in that** the control unit (IV) by open loop or closed loop controls the hydrostatic auxiliary drive (3, 4, 32, 33) as a function of the estimated value of the coefficient of friction of the road.

4. The vehicle drive according to one of the preceding claims,
**characterized in that**
a) a lateral acceleration sensor (26) measures the lateral acceleration of the vehicle as an operating variable of the vehicle; and
b) the control unit (IV) by open loop or closed loop controls the hydrostatic auxiliary drive (3, 4, 32, 33) when the lateral acceleration of the vehicle exceeds a specific limit value.

5. The vehicle drive according to one of the preceding claims,
**characterized in that**
a) a lateral acceleration sensor (26) measures the lateral acceleration of the vehicle as an operating variable of the vehicle; and
b) a steering angle sensor (26) measures the steering angle of a steered vehicle axle; and
c) the control unit (IV) compares the lateral acceleration of the vehicle with the steering angle and by open loop or closed loop controls the hydrostatic auxiliary drive (3, 4, 32, 33) as a function of the comparison.

6. The vehicle drive according to one of the preceding claims,
**characterized in that**
a) an inclination sensor (26) measures the angle of inclination of the vehicle in the vehicle longitudinal direction and/or in the vehicle transverse direction as an operating variable of the vehicle; and/or
b) a road wheel load sensor (26) measures the road wheel load of the vehicle as an operating variable of the vehicle; and
c) the control unit (IV) by open loop or closed loop controls the hydrostatic auxiliary drive (3, 4, 32, 33) when the angle of inclination of the vehicle and/or the road wheel load of a vehicle road wheel exceeds a specific limit value.

7. The vehicle drive according to one of the preceding claims,
**characterized in that**
a) the control unit (IV) for assisting steering and/or for improving the cornering dynamics computes a distribution of propulsion power between the left and the right side of the vehicle, in particular as a function of the following operating variables of the vehicle:
a1) steering angle;
a2) vehicle speed; and/or
a3) differences in the coefficients of friction of the road between the left and the right side of the vehicle; and
b) that the control unit (IV) by way of the computed distribution of propulsion power actuates hydraulic motors (3, 4, 32, 33) on the left side of the vehicle and on the right side of the vehicle so as to improve the cornering dynamics and/or assist steering.

8. The vehicle drive according to one of the preceding claims,
**characterized in that**
a) the primary drive (34) drives the vehicle road wheels (7, 8) of a primary drive axle (II) of the vehicle;
b) the hydrostatic auxiliary drive (3, 4) drives the vehicle road wheels (1, 2) of a first auxiliary drive axle (I) of the vehicle; and
c) the hydrostatic auxiliary drive (32, 33) additionally drives the vehicle road wheels (28, 29) of a second auxiliary drive axle (V) of the vehicle.

9. The vehicle drive according to Claim 8, **characterized in that**
a) the first auxiliary drive axle (I) is a steered front axle of the vehicle; and/or
b) the second auxiliary drive axle (V) is a liftable vehicle axle of which the vehicle road wheels when not required can be raised from the carriageway; and/or
c) the second auxiliary drive axle (V) is a trailing axle which in the travel direction is disposed behind the primary drive axle (II); or
d) the second auxiliary drive axle (V) is a leading axle which in the travel direction is disposed in front of the primary drive axle (II).

10. The vehicle drive according to Claim 8, **characterized in that**
a) the primary drive axle (II) is a first rear axle; and
b) the auxiliary drive axle (I, V) is a second rear axle;
c) the auxiliary drive axle (I, V) as a leading axle in the travel direction is disposed in front of the primary drive axle (II) or as a trailing axle in the travel direction is disposed behind the primary drive axle (II).

11. The vehicle drive according to one of the preceding claims, **characterized in that**
a) the vehicle drive has two axles, specifically
a1) a steered front axle having the auxiliary drive; and
a2) a primary drive axle having the primary drive; or
b) the vehicle drive has three axles, specifically
b1) a steered front axle having the auxiliary drive;
b2) a primary drive axle having the primary drive; and
b3) a non-driven leading axle, wherein the leading axle is steerable or non-steerable, and liftable or non-liftable; or
c) the vehicle drive has three axles, specifically
c1) a steered front axle having the auxiliary drive;
c2) a primary drive axle having the primary drive; and
c3) a leading axle having an auxiliary drive, wherein the leading axle is steerable or non-steerable, and liftable or non-liftable; or
d) the vehicle drive has three axles, specifically
d1) a steered non-driven front axle;
d2) a primary drive axle having the primary drive; and
d3) a leading axle having the auxiliary drive, wherein the leading axle is steerable or non-steerable, and liftable or non-liftable; or
e) the vehicle drive has three axles, specifically
e1) a steered front axle having the auxiliary drive;
e2) a primary drive axle having the primary drive; and
e3) a non-driven trailing axle, wherein the trailing axle is steerable or non-steerable, and liftable or non-liftable; or
f) the vehicle drive has three axles, specifically
f1) a steered front axle having the auxiliary drive;
f2) a primary drive axle having the primary drive; and
f3) a trailing axle having an auxiliary drive, wherein the trailing axle is steerable or non-steerable, and liftable and non-liftable; or
g) the vehicle drive has three axles, specifically
g1) a steered front axle without a drive;
g2) a primary drive axle having the primary drive; and
g3) a trailing axle having the auxiliary drive, wherein the trailing axle is steerable or non-steerable, and liftable or non-liftable; or
h) the vehicle drive has four axles, specifically
h1) a steered front axle with or without an auxiliary drive;
h2) a primary drive axle having the primary drive;
h3) a leading axle; and
h4) a trailing axle, wherein the leading axle and the trailing axle are steerable or non-steerable, and liftable or non-liftable, and are embodied with or without an auxiliary drive; or
i) the vehicle drive has four axles, specifically
i1) a first steered front axle with or without an auxiliary drive;
i2) a second steered front axle with or without an auxiliary drive, wherein the second front axle is liftable or non-liftable;
i3) a primary drive axle having the primary drive;
i4) a trailing axle with or without an auxiliary drive, wherein the trailing axle is steerable or non-steerable, and liftable or non-liftable.

12. The vehicle drive according to one of the preceding claims, **characterized in that**
a) the hydrostatic auxiliary drive (3, 4, 32, 33) has a high-pressure pump (13, 36); and
b) the control unit (IV) sets the volumetric flow of the hydrostatic auxiliary drive (3, 4, 32, 33), wherein
b1) the high-pressure pump (36) is a variable pump so as to be able to set the volumetric flow; or
b2) the volumetric flow is set by the control unit (IV) by way of actuating members, should the high-pressure pump (13) have a constant displacement.

13. The vehicle drive according to one of the preceding claims, **characterized in that**
a) the hydrostatic auxiliary drive (3, 4, 32, 33) has a plurality of hydraulic motors (3, 4, 32, 33), each driving in each case one vehicle road wheel (1, 2, 28, 29); and
b) the control unit (IV) actuates the individual hydraulic motors (3, 4, 32, 33) in a mutually independent manner.

14. The vehicle drive according to one of the preceding claims,
**characterized in that**
the operating variables of the vehicle detected by the control unit (IV) comprise at least one of the following operating variables:
a) vehicle speed;
b) vehicle acceleration in the vehicle longitudinal direction and/or in the vehicle transverse direction;
c) vehicle position;
d) angle of inclination of the vehicle, in particular the longitudinal inclination and/or the transverse inclination of the vehicle;
e) oil temperature;
f) oil pressure;
g) volumetric flow of the oil;
h) difference in terms of the rotating speed between the rotating speeds of the vehicle road wheels of the same vehicle axle;
i) difference in terms of the rotating speed between the rotating speeds of different vehicle axles;
j) ambient pressure;
k) air humidity;
l) image of a vehicle camera;
m) individual road wheel loads on the vehicle.

15. A vehicle, in particular a commercial vehicle, having a vehicle drive according to one of the preceding claims.

16. An operating method for a vehicle drive according to one of Claims 1 to 14,
**characterized in that**
the hydrostatic auxiliary drive (3, 4, 32, 33) by open loop or closed loop is automatically controlled as a function of at least one operating variable of the vehicle.

## Revendications

1. Entraînement de véhicule pour un véhicule, en particulier pour un véhicule utilitaire, comprenant
a) un entraînement principal (34) pour le véhicule, en particulier avec un moteur à combustion interne,
b) un entraînement hydrostatique auxiliaire (3, 4, 32, 33) pour le véhicule et
c) une unité de commande (IV) qui détecte au moins une grandeur fonctionnelle du véhicule, en particulier pour la désactivation automatique de l'entraînement hydrostatique auxiliaire (3, 4, 32, 33) en fonction de l'au moins une grandeur fonctionnelle du véhicule,
dans lequel
d) l'unité de commande (IV) commande ou régule automatiquement l'entraînement hydrostatique auxiliaire (3, 4, 32, 33) en fonction de l'au moins une grandeur fonctionnelle,
e) l'entraînement principal (34) entraîne un essieu d'entraînement principal (II) du véhicule,
**caractérisé en ce que**
f) un capteur de vitesse de rotation (9, 10) mesure, en tant que grandeur fonctionnelle du véhicule, la vitesse de rotation de l'essieu d'entraînement principal (II),
g) un capteur d'accélération (26) mesure, en tant que grandeur fonctionnelle du véhicule, une valeur instantanée de l'accélération longitudinale positive ou négative du véhicule,
h) l'unité de commande (IV) calcule, à partir de la vitesse de rotation mesurée de l'essieu d'entraînement principal (II), une valeur comparative de l'accélération longitudinale positive ou négative du véhicule, et
i) l'unité de commande (IV) commande ou régule l'entraînement hydrostatique auxiliaire (3, 4, 32, 33) si la valeur instantanée mesurée de l'accélération longitudinale positive ou négative du véhicule s'écarte de la valeur comparative calculée de l'accélération longitudinale positive ou négative du véhicule.

2. Entraînement de véhicule selon la revendication 1, **caractérisé en ce que**
a) l'entraînement hydrostatique auxiliaire (3, 4, 32, 33) entraîne un essieu d'entraînement auxiliaire (I, V) du véhicule,
b) des capteurs de vitesse de rotation (5, 6, 9, 10, 30, 31) mesurent, en tant que grandeur fonctionnelle du véhicule, les vitesses de rotation de l'essieu d'entraînement principal (II) et de l'essieu d'entraînement auxiliaire (I, V),
c) l'unité de commande (IV) détermine les différences de vitesse de rotation entre les vitesses de rotation des roues du véhicule au niveau de l'essieu d'entraînement principal (II) et les vitesses de rotation des roues du véhicule au niveau de l'essieu d'entraînement auxiliaire (I, V), et
d) l'unité de commande (IV) commande ou régule automatiquement l'entraînement hydrostatique auxiliaire (3, 4, 32, 33) en fonction de la différence de vitesse de rotation déterminée
d1) entre l'essieu d'entraînement principal (II) et l'essieu d'entraînement auxiliaire (I, V) et/ou
d2) entre le côté gauche et le côté droit du véhicule.

3. Entraînement de véhicule selon l'une quelconque des revendications précédentes,
**caractérisé en ce que**
a) l'unité de commande (IV) détermine, en fonction des grandeurs fonctionnelles mesurées du véhicule, une valeur d'évaluation pour le coefficient de frottement de la route, en particulier en fonction des grandeurs fonctionnelles suivantes :
a1) la température de l'environnement,
a2) la position du véhicule,
a3) l'humidité de l'air,
a4) l'heure, et/ou
a5) une image de caméra de la route, et
b) l'unité de commande (IV) commande ou régule l'entraînement hydrostatique auxiliaire (3, 4, 32, 33) en fonction de la valeur d'évaluation du coefficient de frottement de la route.

4. Entraînement de véhicule selon l'une quelconque des revendications précédentes,
**caractérisé en ce que**
a) un capteur d'accélération transversale (26) mesure, en tant que grandeur fonctionnelle du véhicule, l'accélération transversale du véhicule, et
b) l'unité de commande (IV) commande ou régule l'entraînement hydrostatique auxiliaire (3, 4, 32, 33) si l'accélération transversale du véhicule dépasse une valeur limite déterminée.

5. Entraînement de véhicule selon l'une quelconque des revendications précédentes,
**caractérisé en ce que**
a) un capteur d'accélération transversale (26) mesure, en tant que grandeur fonctionnelle du véhicule, l'accélération transversale, et
b) un capteur d'angle de direction (26) mesure l'angle de direction d'un essieu dirigé du véhicule et
c) l'unité de commande (IV) compare l'accélération transversale du véhicule avec l'angle de direction et commande ou régule l'entraînement hydrostatique auxiliaire (3, 4, 32, 33) en fonction de la comparaison.

6. Entraînement de véhicule selon l'une quelconque des revendications précédentes,
**caractérisé en ce que**
a) un capteur d'inclinaison (26) mesure, en tant que grandeur fonctionnelle du véhicule, l'angle d'inclinaison du véhicule dans la direction longitudinale du véhicule et/ou dans la direction transversale du véhicule, et/ou
b) un capteur de charge des roues (26) mesure, en tant que grandeur fonctionnelle du véhicule, la charge des roues du véhicule et
c) l'unité de commande (IV) commande ou régule l'entraînement hydrostatique auxiliaire (3, 4, 32, 33) lorsque l'angle d'inclinaison du véhicule et/ou la charge des roues d'une roue du véhicule dépasse une valeur limite déterminée.

7. Entraînement de véhicule selon l'une quelconque des revendications précédentes,
**caractérisé en ce que**
a) l'unité de commande (IV) pour l'assistance à la direction et/ou pour améliorer la dynamique en virage, calcule une répartition des forces d'entraînement entre le côté gauche et le côté droit du véhicule, en particulier en fonction des grandeurs fonctionnelles suivantes du véhicule :
a1) l'angle de direction,
a2) la vitesse du véhicule, et/ou
a3) des différences de coefficient de frottement de la route entre le côté gauche et le côté droit du véhicule, et
b) l'unité de commande (IV) pilote des moteurs hydrauliques (3, 4, 32, 33) au niveau du côté gauche du véhicule et au niveau du côté droit du véhicule avec la répartition des forces d'entraînement calculée afin d'améliorer la dynamique en virage et/ou en vue de l'assistance à la direction.

8. Entraînement de véhicule selon l'une quelconque des revendications précédentes,
**caractérisé en ce que**
a) l'entraînement principal (34) entraîne les roues du véhicule (7, 8) d'un essieu d'entraînement principal (II) du véhicule,
b) l'entraînement hydrostatique auxiliaire (3, 4) entraîne les roues du véhicule (1, 2) d'un premier essieu d'entraînement auxiliaire (I) du véhicule, et
c) l'entraînement hydrostatique auxiliaire (32, 33) entraîne en outre les roues du véhicule (28, 29) d'un deuxième essieu d'entraînement auxiliaire (V) du véhicule.

9. Entraînement de véhicule selon la revendication 8, **caractérisé en ce que**
a) le premier essieu d'entraînement auxiliaire (I) est un essieu avant dirigé du véhicule, et/ou
b) le deuxième essieu d'entraînement auxiliaire (V) est un essieu de véhicule levable, dont les roues de véhicule peuvent être soulevées de la chaussée lorsqu'elles ne sont pas nécessaires, et/ou
c) le deuxième essieu d'entraînement auxiliaire (V) est un essieu suiveur qui est disposé dans la direction de conduite derrière l'essieu d'entraînement principal (II), ou
d) le deuxième essieu d'entraînement auxiliaire (V) est un essieu poussé qui est disposé dans la direction de conduite devant l'essieu d'entraînement principal (II).

10. Entraînement de véhicule selon la revendication 8, **caractérisé en ce que**
a) l'essieu d'entraînement principal (II) est un premier essieu arrière, et
b) l'essieu d'entraînement auxiliaire (I, V) est un deuxième essieu arrière,
c) l'essieu d'entraînement auxiliaire (I, V) est disposé dans la direction de conduite, en tant qu'essieu poussé, devant l'essieu d'entraînement principal (II) ou, en tant qu'essieu suiveur, derrière ce dernier.

11. Entraînement de véhicule selon l'une quelconque des revendications précédentes, **caractérisé en ce que**
a) l'entraînement de véhicule présente deux essieux, à savoir
a1) un essieu avant articulé avec l'entraînement auxiliaire et
a2) un essieu d'entraînement principal avec l'entraînement principal, ou
b) l'entraînement de véhicule présente trois essieux, à savoir
b1) un essieu avant articulé avec l'entraînement auxiliaire,
b2) un essieu d'entraînement principal avec l'entraînement principal et
b3) un essieu poussé non entraîné, l'essieu poussé pouvant être dirigé ou non dirigé et pouvant être levé ou non levé, ou
c) l'entraînement de véhicule présente trois essieux, à savoir
c1) un essieu avant articulé avec l'entraînement auxiliaire,
c2) un essieu d'entraînement principal avec l'entraînement principal et
c3) un essieu poussé avec un entraînement auxiliaire, l'essieu poussé pouvant être dirigé ou non dirigé et pouvant être levé ou non levé, ou
d) l'entraînement de véhicule présente trois essieux, à savoir
d1) un essieu avant articulé, non entraîné,
d2) un essieu d'entraînement principal avec l'entraînement principal et
d3) un essieu poussé avec l'entraînement auxiliaire, l'essieu poussé pouvant être dirigé ou non dirigé et pouvant être levé ou non levé, ou
e) l'entraînement de véhicule présente trois essieux, à savoir
e1) un essieu avant articulé avec l'entraînement auxiliaire,
e2) un essieu d'entraînement principal avec l'entraînement principal et
e3) un essieu suiveur non entraîné, l'essieu suiveur pouvant être dirigé ou non dirigé et pouvant être levé ou non levé, ou
f) l'entraînement de véhicule présente trois essieux, à savoir
f1) un essieu avant articulé avec l'entraînement auxiliaire,
f2) un essieu d'entraînement principal avec l'entraînement principal et
f3) un essieu suiveur avec un entraînement auxiliaire, l'essieu suiveur pouvant être dirigé ou non dirigé et pouvant être levé ou non levé, ou
g) l'entraînement de véhicule présente trois essieux, à savoir
g1) un essieu avant articulé sans entraînement,
g2) un essieu d'entraînement principal avec l'entraînement principal et
g3) un essieu suiveur avec l'entraînement auxiliaire, l'essieu suiveur pouvant être dirigé ou non dirigé et pouvant être levé ou non levé, ou
h) l'entraînement de véhicule présente quatre essieux, à savoir
h1) un essieu avant articulé avec ou sans entraînement auxiliaire,
h2) un essieu d'entraînement principal avec l'entraînement principal,
h3) un essieu poussé et
h4) un essieu suiveur, l'essieu poussé et l'essieu suiveur pouvant être dirigés ou non dirigés et pouvant être levés ou non levés et étant réalisés avec ou sans entraînement auxiliaire, ou
i) l'entraînement de véhicule présente quatre essieux, à savoir
i1) un premier essieu avant articulé avec ou sans entraînement auxiliaire,
i2) un deuxième essieu avant articulé avec ou sans entraînement auxiliaire, le deuxième essieu avant pouvant être soulevé ou non soulevé,
i3) un essieu d'entraînement principal avec l'entraînement principal,
i4) un essieu suiveur avec ou sans entraînement auxiliaire, l'essieu suiveur pouvant être dirigé ou non dirigé et pouvant être levé ou non levé.

12. Entraînement de véhicule selon l'une quelconque des revendications précédentes,
**caractérisé en ce que**
a) l'entraînement hydrostatique auxiliaire (3, 4, 32, 33) présente une pompe haute pression (13, 36), et
b) l'unité de commande (IV) ajuste le débit volumique de l'entraînement hydrostatique auxiliaire (3, 4, 32, 33),
b1) la pompe haute pression (36) étant une pompe de réglage pour pouvoir ajuster le débit volumique ou
b2) le débit volumique étant ajusté par l'unité de commande (IV) par des organes de réglage si la pompe haute pression (13) présente une cylindrée constante.

13. Entraînement de véhicule selon l'une quelconque des revendications précédentes,
**caractérisé en ce que**
a) l'entraînement hydrostatique auxiliaire (3, 4, 32, 33) présente plusieurs moteurs hydrauliques (3, 4, 32, 33) qui entraînent chacun une roue de véhicule (1, 2, 28, 29), et
b) l'unité de commande (IV) pilote les moteurs hydrauliques individuels (3, 4, 32, 33) indépendamment les uns des autres.

14. Entraînement de véhicule selon l'une quelconque des revendications précédentes, **caractérisé en ce que** les grandeurs fonctionnelles du véhicule détectées par l'unité de commande (IV) comprennent au moins l'une des grandeurs fonctionnelles suivantes :
a) la vitesse du véhicule,
b) l'accélération du véhicule dans la direction longitudinale du véhicule et/ou dans la direction transversale du véhicule,
c) la position du véhicule,
d) l'angle d'inclinaison du véhicule, en particulier l'inclinaison longitudinale et/ou l'inclinaison transversale du véhicule,
e) la température d'huile,
f) la pression d'huile,
g) le débit volumique d'huile,
h) la différence de vitesse de rotation entre les vitesses de rotation des roues de véhicule du même essieu de véhicule,
i) la différence de vitesse de rotation entre les vitesses de rotation de différents essieux du véhicule,
j) la température environnante,
k) l'humidité de l'air,
l) une image d'une caméra du véhicule,
m) des charges de roues individuelles au niveau du véhicule.

15. Véhicule, en particulier véhicule utilitaire, comprenant un entraînement de véhicule selon l'une quelconque des revendications précédentes.

16. Procédé de fonctionnement pour un entraînement de véhicule selon l'une quelconque des revendications 1 à 14, **caractérisé en ce que** l'entraînement hydrostatique auxiliaire (3, 4, 32, 33) est commandé ou régulé automatiquement en fonction d'au moins une grandeur fonctionnelle du véhicule.
